# EUROPÄISCHE PATENTSCHRIFT

(11) **EP 3 060 086 B1**
(45) Veröffentlichungstag und Bekanntmachung des Hinweises auf die Patenterteilung: **18.07.2018**
(21) Anmeldenummer: 14780878.6
(22) Anmeldetag: 06.10.2014
(51) Int. Cl.: A47J 31/36, A47J 31/06

(54) **MODULARE BRÜHEINHEIT FÜR EINE KAFFEEMASCHINE**
MODULAR BREWING UNIT FOR A COFFEE MACHINE
UNITÉ D'INFUSION MODULAIRE POUR MACHINE À CAFÉ

(30) Priorität: 21.10.2013 CH 17862013
(43) Veröffentlichungstag der Anmeldung: 31.08.2016
(73) Patentinhaber: Schaerer AG, 4528 Zuchwil (CH)
(72) Erfinder: LÜSSI, André, CH-3303 Jegenstorf (CH); HOSTETTLER, Hans-Ulrich, 3114 Wichtrach (CH)
(74) Vertreter: IPrime Rentsch Kaelin AG
(86) Internationale Anmeldenummer: PCT/EP2014/071338
(87) Internationale Veröffentlichungsnummer: WO 2015/058952

(56) Entgegenhaltungen:
- EP-A1- 0 217 198
- EP-A1- 0 538 191
- WO-A1-2009/056426

## Beschreibung

### TECHNISCHES GEBIET

Die vorliegende Erfindung bezieht sich auf das Gebiet der Kaffeemaschinen. Sie betrifft eine modulare Brüheinheit für eine Kaffeemaschine gemäss dem Oberbegriff des Anspruchs 1.

### STAND DER TECHNIK

Es sind seit langem motorisch angetriebene, automatisch arbeitende Brüheinheiten für Kaffeemaschinen, insbesondere Kaffeeautomaten, bekannt und erfolgreich im Einsatz, die praktisch vollständig aus Kunststoff bestehen, kompakt aufgebaut sind und sich durch Robustheit, ausgezeichnete Brühergebnisse und fehlerfreien Langzeitbetrieb auszeichnen. Eine derartige Brüheinheit, wie sie beispielsweise aus den Druckschriften WO 2009040227 A1 oder WO 2009056426 A1 oder WO 20091 18246 A1 der Anmelderin bekannt ist, ist in Fig. 1 im Längsschnitt wiedergegeben.

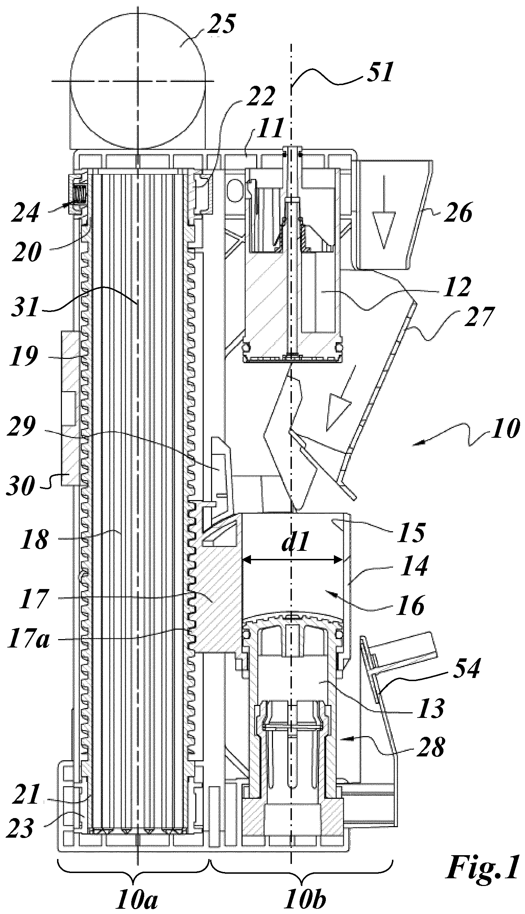

Die in Fig. 1 dargestellte Brüheinheit 10 umfasst einen näherungsweise quaderförmigen Rahmen 11 mit zwei parallelen Seitenwänden und einer Vorderseite und einer Rückseite, in dem hintereinander und mit ihren Achsen 51 und 31 parallel zueinander ein Brühteil 10b und ein Antriebsteil 10a untergebracht sind. Der Antriebsteil 10a weist eine sich über die ganze Höhe erstreckende Spindel 18 auf, die um eine vertikale Achse 31 drehbar mit einem oberen Lagerzapfen 20 und einem unteren Lagerzapfen 21 in entsprechenden Lagerringen 22 und 23 im Rahmen 11 gelagert sind. Im Lagerring 22 ist ein Lagerelement 24 eingesetzt, mit welchem das Spiel zwischen Lagerzapfen 20 und Lagerring 22 aufgehoben wird. Die innen hohle Spindel 18 ist im Beispiel der Fig. 1 durch einen oben angeordneten Elektromotor 25 antreibbar, der ebenfalls am Rahmen 11 angebracht ist. Sie weist auf der Aussenseite ein Gewinde 19 mit trapezförmigem Querschnittsprofilauf.

Wie aus Fig. 1 ersichtlich ist und auch beispielsweise in der Druckschrift WO 2009118246 A1 erläutert ist, umfasst der Brühteil 10b der Brüheinheit 10 einen im Rahmen 11 ortsfest gehaltenen oberen Kolben 12. Dem oberen Kolben 12 in der Achse 51 axial gegenüberliegend ist ein unterer Kolben 13 angeordnet, der bezüglich des oberen Kolbens 12 axial verschiebbar ist. Dieser untere Kolben 13 ist in einer zylindrischen Bohrung 15 eines Brühzylinders 14 gehalten, welcher Brühzylinder 14 ebenfalls axial verschiebbar ist. Der Brühzylinder 14 ist mit einem Mitnahmeteil 17 ausgestattet, an welchem ein Gewindeteil 17a angebracht ist, welcher Gewindeteil 17a mit dem Gewinde 19 der Spindel 18 des Antriebsteils 10a im Eingriff ist.

In Fig. 1 ist der Brühteil 10b in der Füllposition dargestellt. Dies bedeutet, dass sich der untere Kolben 13 in der untersten Position befindet, in welcher er durch eine am Rahmen 11 angebrachte Klinkeinrichtung 28 gehalten wird. Diese Position hat der untere Kolben 13 erreicht, indem der Brühzylinder 14 durch Drehen der Spindel 18 ebenfalls in die unterste Position gebracht worden ist und dabei den unteren Kolben 13 mitgenommen hat, bis er in die Klinkeinrichtung 28 eingeklinkt ist. Danach ist der Brühzylinder 14 durch entsprechendes Drehen der Spindel 18 in Gegenrichtung wieder hoch gefahren worden, bis er die in Fig. 1 gezeigte Position erreicht hat. Der untere Kolben 13 ist dabei in der untersten Position verblieben, so dass der Brühzylinder 14 relativ zum unteren Kolben 13 angehoben worden ist. Dadurch hat sich innerhalb des Brühzylinders 14 die nach unten durch den unteren Kolben 13 abgeschlossene Brühkammer 16 ausgebildet. Im Brühteil 10b ist weiterhin ein quer zur Achse 51 verschwenkbarer Abstreifer 29 vorgesehen, der sich in der in Fig. 1 dargestellten Füllposition in seiner Ruheposition über dem Mitnahmeteil 17 befindet, so dass die Brühkammer 16 von oben ungehindert zugänglich ist.

Wie in der bereits erwähnten WO 2009118246 A1 beschrieben, wird zu Beginn eines Brühzyklus in die Brühkammer 16 nun das frisch gemahlene Kaffeepulver zugeführt. Dieses Kaffeepulver ist zuvor in bekannter Weise in einer Kaffeemühle, die nicht dargestellt ist und die ebenfalls in der entsprechenden Kaffeemaschine untergebracht ist, gemahlen worden. Das Kaffeepulver gelangt über einen ersten Trichter 26 auf einen zweiten, schwenkbaren Trichter 27, durch welchen das gemahlene Kaffeepulver in die Brühkammer 16 geleitet wird. Hierzu befindet sich der schwenkbare Trichter 27, welcher schwenkbar am Rahmen 11 gelagert ist, in der eingeschwenkten Füllposition. Das zugeführte Kaffeepulver gelangt somit in die Brühkammer 16. Die zugeführte Kaffeepulvermenge wird in bekannter Weise dosiert, je nachdem welche Art von Kaffee bezogen werden soll. In einer Brüheinheit 10 gemäss Fig. 1 beträgt die Menge Kaffeepulver üblicherweise ca. 16g.

Nach dem Befüllen der Brühkammer 16 mit frisch gemahlenem Kaffeepulver wird die Spindel 18 durch den Elektromotor 25 in Rotation versetzt. Über den Gewindeteil 17a am Mitnahmeteil 17 wird der Brühzylinder 14 hoch gefahren, wobei der untere Kolben 13 über entsprechende Mitnehmer mitgenommen und aus der Klinkeinrichtung 28 ausgeklinkt wird. Der Brühzylinder 14 und der untere Kolben 13 werden soweit hochgefahren, bis die Brühkammer 16 durch den oberen Kolben 12 verschlossen und das sich in der Brühkammer 16 befindliche Kaffeepulver durch den oberen Kolben 12 zusammengepresst wird.

In dieser Brühstellung wird nun in bekannter Weise von unten her in die Brühkammer 16 heisses Wasser zugeführt, welches die Brühkammer 16 und das sich darin befindende gemahlene Kaffeepulver von unten nach oben durchströmt und über einen Abflusskanal, der in bekannter Weise im oberen Kolben 12 vorgesehen ist, als gebrühter Kaffee abgeleitet und über eine nicht dargestellte Leitung in einen Auslass der Kaffeemaschine und von dort in ein darunter bereit gestelltes Gefäss, einen Becher oder eine Tasse, ausgelassen wird.

Zum Brühen des Kaffees wird das in der Brühkammer 16 sich befindende Kaffeepulver zwischen den beiden Kolben 12 und 13 derart komprimiert, dass dieses dem durchströmenden Brühwasser einen Widerstand entgegen setzt, sodass das Brühwasser mit einem Druck von etwa 8 bar durch die Brühkammer gepresst werden muss. Das ausgebrühte Kaffeepulver verbleibt in der Brühkammer 16 und bildet einen Kaffeepulverkuchen, der sehr kompakt und feucht ist. Um Verschiebungen des Brühzylinders 14 und damit auch des unteren Kolbens 13 während der Beaufschlagung mit dem Brühdruck aufgrund der auftretenden Kräfte Querkräfte in Zusammenwirkung mit den trapezförmigen Gewinden 19 zu vermeiden ist auf der gegenüberliegenden Seite der Spindel 18 auf der Höhe, welche die Brühkammer 16 beim Brühen einnimmt, eine Abstützplatte 30 ortsfest angeordnet, die einem Verbiegen der Spindel 18 entgegenwirken soll.

Der schwenkbare Trichter 27 wird beim Hochfahren des Brühzylinders 14 mit dem unteren Kolben 13 aus der in Fig. 1 gezeigten Füllposition nach aussen zurückgeschwenkt, was entgegen einer auf den schwenkbaren Trichter 27 wirkenden Federkraft erfolgt. Durch das Wegschwenken des schwenkbaren Trichters 27 wird der Raum zwischen oberem Kolben 12 und Brühzylinder 14 frei gegeben, sodass der Brühzylinder 14 beim Hochfahren der Brühkammer 16 nicht mit dem schwenkbaren Trichter 27 kollidiert. Die Länge des schwenkbaren Trichters 27 sowie seine Schrägstellung müssen dazu auf Höhe und Verfahrweg des Brühzylinders 14 abgestimmt sein.

Nach der Durchführung des Brühvorgangs wird die Brühkammer 16 geöffnet, indem der Brühzylinder 14 und der untere Kolben 13 durch entsprechendes Verdrehen der Spindel 18 wieder nach unten gefahren werden. Der untere Kolben 13 erreicht hierbei mit seinem unteren Ende die Klinkeinrichtung 28 und stützt sich darauf ab. Der Brühzylinder 14 wird weiter nach unten gefahren, während der untere Kolben 13 stehen bleibt, wodurch der Kaffeepulverkuchen aus dem Brühzylinder 14 herausgedrückt wird. Wenn der Brühzylinder 14 bei seiner Abwärtsbewegung mit seinem oberen Rand den oberen Rand des unteren Kolbens 13 erreicht hat, liegt der ausgestossene Kaffeepulverkuchen auf dem unteren Kolben 13 auf, der untere Kolben 13 wird mit dem weiter nach unten fahrenden Brühzylinder 14 über entsprechende Anschläge mitgenommen und in die Klinkeinrichtung 28 eingefahren. Wenn sowohl der Brühzylinder 14 als auch der untere Kolben 13 in den Bereich der unteren Position gelangen, wird der Abstreifer 29, welcher in bekannter Weise am Brühzylinder 14 angelenkt ist, über eine am Rahmen 11 angebrachte Kulisse mechanisch betätigt. Hierdurch bewegt sich der Abstreifer 29 quer über den unteren Kolben 13 und streift den Kaffeepulverkuchen vom unteren Kolben 13 und dem Brühzylinder 14 ab. Der Kaffeepulverkuchen rutscht dann auf einer Rutsche 54 in einen dafür vorgesehenen (nicht gezeigten) Auffangbehälter.

Die gerade beschriebene Mechanik gemäss der Fig. 1 hat sich in der Praxis ausgezeichnet bewährt. Sie ist in ihrer jeweiligen Ausgestaltung des Brühteils 10b jedoch auf eine vorbestimmte Menge Kaffeepulver ausgerichtet, die beispielsweise ca. 16g betragen kann.

Damit können viele Anwendungsfälle abgedeckt werden.

Es besteht jedoch der Wunsch, auch andere Füllmengen optimal verarbeiten zu können, wie z.B. 10g oder 30g Kaffeepulver, um entsprechend andere Flüssigkeitsmengen pro Brühzyklus zu erhalten. Hierbei sollte allerdings eine vollständige Neukonstruktion der Brüheinheit aus Kosten- und Zeitgründen vermieden werden.

Andererseits ist zu berücksichtigen, dass andere Pulvermengen und damit andere Volumina der Brühkammer möglicherweise zu anderen Bedingungen beim Zusammenpressen des Pulvers wie auch beim Durchgang des Brühwassers führen.

### DARSTELLUNG DER ERFINDUNG

Es ist daher eine Aufgabe der Erfindung, eine Brüheinheit zu schaffen, die bei gleich bleibenden Aussenabmessungen auf einfache Weise zur Verwirklichung anderer Brühbedingungen, wie z.B. andere Kaffeepulvermengen pro Brühzyklus, verändert werden kann.

Die Aufgabe wird durch die Merkmale des Anspruchs 1 gelöst.

Die Erfindung geht dabei aus von einer modularen Brüheinheit für eine Kaffeemaschine, umfassend einen Brühteil und einen Antriebsteil, welche parallel nebeneinander in einem gemeinsamen Rahmen angeordnet sind, wobei der Brühteil entlang einer gemeinsamen ersten Achse konzentrisch angeordnet einen oberen Kolben, einen unteren Kolben und zwischen den beiden Kolben einen Brühzylinder mit einer zylindrischen Bohrung zur Aufnahme der beiden Kolben unter Ausbildung einer Brühkammer aufweist, und wobei der Antriebsteil eine Spindel umfasst, welche sich entlang einer zur ersten Achse parallelen Antriebsachse erstreckt, um diese Antriebsachse drehbar im Rahmen gelagert ist und mit dem Brühzylinder und dem unteren Kolben derart in Engriff steht, dass während eines Brühzyklus bei Drehung der Spindel der Brühzylinder und der untere Kolben relativ zum im Rahmen fest montierten oberen Kolben entlang der ersten Achse verfahren werden. Sie ist dadurch gekennzeichnet, dass zur Verwirklichung unterschiedlicher Brühbedingungen der Antriebsteil mit unterschiedlich ausgebildeten Brühteilen kombinierbar ist.

Eine Ausgestaltung der Erfindung ist dadurch gekennzeichnet, dass die unterschiedlich ausgebildeten Brühteile zur Aufnahme unterschiedlicher Mengen an Kaffeepulver pro Brühzyklus ausgebildet sind.

Insbesondere unterscheiden sich dabei die unterschiedlich ausgebildeten Brühteile in der Grösse der Brühkammer.

Vorzugsweise unterscheiden sich die unterschiedlich ausgebildeten Brühteile im Innendurchmesser der Brühkammer, wobei der obere und untere Kolben im Aussendurchmesser an den Innendurchmesser der Brühkammer angepasst sind.

Eine andere Ausgestaltung der Erfindung ist dadurch gekennzeichnet, dass der Brühzylinder durch die Spindel angetrieben ist, dass der untere Kolben im Brühzylinder entlang der ersten Achse verfahrbar gelagert ist, dass der untere Kolben mittels einer am Rahmen fest angeordneten Klinkeinrichtung in einer unteren Endstellung fixierbar ist, und dass die Klinkeinrichtung für unterschiedlich ausgebildete Brühteile dieselbe ist.

Eine wieder andere Ausgestaltung der Erfindung ist dadurch gekennzeichnet, dass am Brühteil ein schwenkbarer Trichter zum Einfüllen des Kaffeepulvers in die geöffnete Brühkammer vorgesehen ist, und dass der schwenkbare Trichter in seiner Ausgestaltung an den unterschiedlich ausgebildeten Brühteil angepasst ist.

Insbesondere ist der schwenkbare Trichter in seiner Länge an den Brühzylinder angepasst.

Vorzugsweise weist der schwenkbare Trichter eine Krümmung auf.

Insbesondere weist der schwenkbare Trichter mehrere Trichterabschnitte unterschiedlicher Neigung auf.

Eine weitere Ausgestaltung der Erfindung ist dadurch gekennzeichnet, dass der Auslass des gebrühten Kaffees durch den oberen Kolben erfolgt, und dass zur Verwirklichung unterschiedlicher Brühbedingungen im Brühteil das Auslassverhalten im oberen Kolben durch auswechselbare Einsätze im oberen Kolben anpassbar ist.

Insbesondere weist der obere Kolben für den Auslass einen zentralen Durchgang auf, wobei die auswechselbaren Einsätze in den Durchgang dichtend einsetzbar, insbesondere einschraubbar, sind.

Insbesondere weisen die auswechselbaren Einsätze jeweils einen zylindrischen Körper mit einer konzentrischen Bohrung für den Durchlass des aufgebrühten Kaffees auf.

Vorzugsweise weisen die auswechselbaren Einsätze einen aussen liegenden Gewindeabschnitt auf, gehen am einen Ende in eine Schlauchtülle über, und sind am anderen Ende mit einer aussen liegenden Dichtung versehen.

Vorzugsweise sind die auswechselbaren Einsätze mit Mitteln zur Beeinflussung des Durchflusses durch die Bohrung ausgestattet.

Insbesondere umfassen die Mittel zur Beeinflussung des Durchflusses durch die Bohrung eine auswechselbare Blende.

Es ist aber auch denkbar, dass die Mittel zur Beeinflussung des Durchflusses durch die Bohrung ein Rückschlagventil umfassen.

Eine andere Ausgestaltung der Erfindung ist dadurch gekennzeichnet, dass der Brühzylinder in einem Mitnahmeteil ausgebildet ist, welches über ein Gewindeteil mit der Spindel in Eingriff steht und über seitlich angesetzte Führungsschienen im Rahmen parallel zur ersten Achse geführt ist, und dass die Führungsschienen auf den Gewindeteil einrastend aufgeschnappt sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: einen Längsschnitt durch eine Brüheinheit, wie sie beispielsweise aus der Druckschrift WO 200911 8246 A1 bekannt ist;
- Fig. 2: einen Längsschnitt durch eine Brüheinheit, bei welcher gemäss einem Ausführungsbeispiel der Erfindung bei gleich bleibendem Antriebsteil der Brühteil für eine grössere Menge Kaffeepulver (z.B. 30g statt 16g) ausgelegt ist;
- Fig. 3: die Brüheinheit aus Fig. 2 in der Seitenansicht;
- Fig. 4: die Brüheinheit aus Fig. 2 in der Vorderansicht
- Fig. 5: in einem vergrösserten Ausschnitt den oberen Kolben der Brüheinheit aus Fig. 2 mit einem ersten austauschbaren Einsatz mit einer eingebauten Blende;
- Fig. 6: in einem vergrösserten Ausschnitt den oberen Kolben der Brüheinheit aus Fig. 2 mit einem zweiten austauschbaren Einsatz ohne Durchflussbeschränkung;
- Fig. 7: in drei verschiedenen Teilfiguren (a) bis (c) drei verschieden Ausgestaltungen des austauschbaren Einsatzes für den oberen Kolben; und
- Fig. 8: in mehreren Teilfiguren (a) bis (c) eine vorteilhafte Ausführung des Brühzylinders, bei dem die zur Führung des Brühzylinders notwendigen Führungsschienen (Fig. 8b) seitlich aufschnappbar ausgebildet sind.

### WEGE ZUR AUSFÜHRUNG DER ERFINDUNG

Das modulare Konzept der vorliegenden Erfindung sieht vor, dass bei einer Änderung der Brühbedingungen, also beispielsweise bei der Änderung der pro Brühzyklus eingesetzten Grundmenge an Kaffeepulver, der Antriebsteil 10a der Brüheinheit unverändert gelassen wird und die notwendigen konstruktiven Änderungen ausschliesslich im Brühteil vorgenommen werden. Hierdurch kann auf einfache kosten- und zeitsparende Weise aus einem Basisentwurf für die Brüheinheit eine Familie von ähnlichen Brüheinheiten abgeleitet werden, deren Mitglieder alle denselben Antriebsteil 10a aufweisen, sich jedoch in der Ausgestaltung des Brühteils unterscheiden.

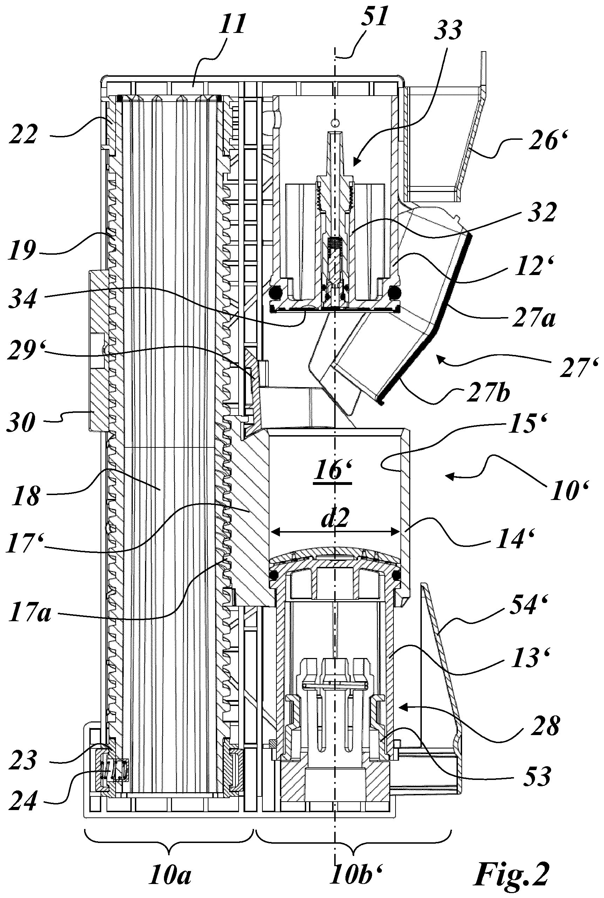

In Fig. 2 ist ein Ausführungsbeispiel einer solchen (von der Brüheinheit aus Fig. 1) abgeleiteten Brüheinheit 10' in der gleichen Darstellung gezeigt, wie die Brüheinheit 10 der Fig. 1. Gleiche Teile sind dabei auch mit gleichen Bezugszeichen bezeichnet. Durch direkten Vergleich erkennt man sofort, dass Rahmen 11, Spindel 18, Lagerung der Spindel 18 im Rahmen mit den Lagerzapfen und Lagerringen 22, 23 und die Klinkeinrichtung 28, 28' praktisch identisch sind - abgesehen von dem unerheblichen Unterschied, dass das Lagerelement 24 in Fig. 1 am oberen Lagerring 22, in Fig. 2 dagegen am unteren Lagerring 23 angeordnet ist.

Die Veränderungen im Brühteil 10b' der Fig. 2 gegenüber der Fig. 1 betreffen einerseits die Grundmenge des pro Brühzyklus eingesetzten Kaffeepulvers. In der Fig. 1 wird ein Brühzylinder 14 mit einem Innendurchmesser d1 der zylindrischen Bohrung 15 verwendet, der im Zusammenspiel mit den beiden Kolben 12 und 13 zu einer Brühkammer 16 führt, die beispielsweise für eine Grundmenge von 16g Kaffeepulver ausgelegt ist. Es versteht sich von selbst, dass die Menge Kaffeepulver, ausgehend von der Grundmenge, in einem gewissen Bereich verändert bzw. eingestellt werden kann, ohne den optimierten Press- und Brühvorgang zu sehr zu verändern bzw. zu beeinträchtigen.

In Fig. 2 wird demgegenüber ein Brühzylinder 14' mit einem Innendurchmesser d2 der zylindrischen Bohrung 15' eingesetzt, der deutlich grösser ist als d1 und im Zusammenspiel mit den beiden Kolben analog vergrösserten Kolben 12' und 13' zu einer Brühkammer 16' führt, die nunmehr für eine Grundmenge von 30g Kaffeepulver ausgelegt ist. Damit der grössere untere Kolben 13' problemlos mit der praktisch unveränderten Klinkeinrichtung 28' in gleicher Weise wie eingangs geschildert zusammenarbeiten kann, ist im Inneren des unteren Kolbens 13' ein entsprechender Adapterring 53 vorgesehen.

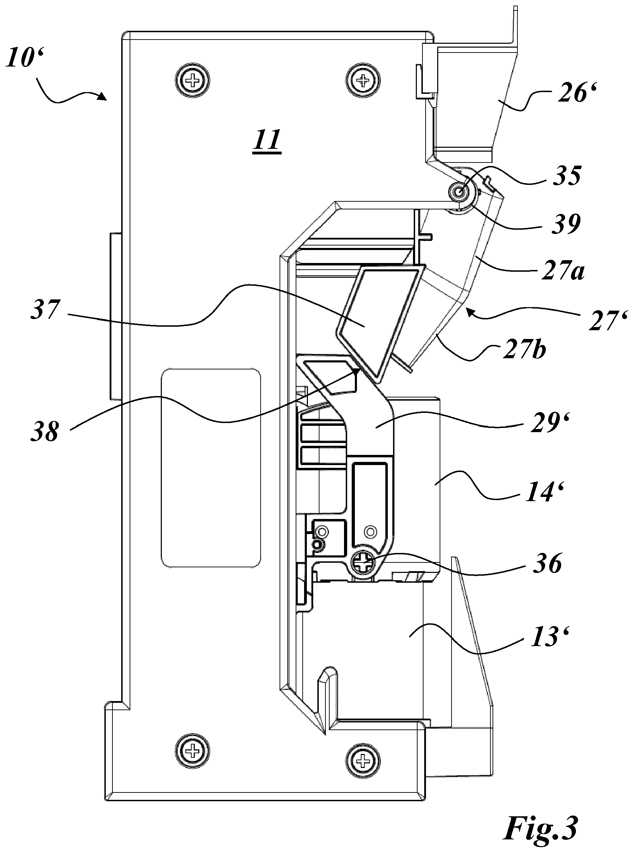

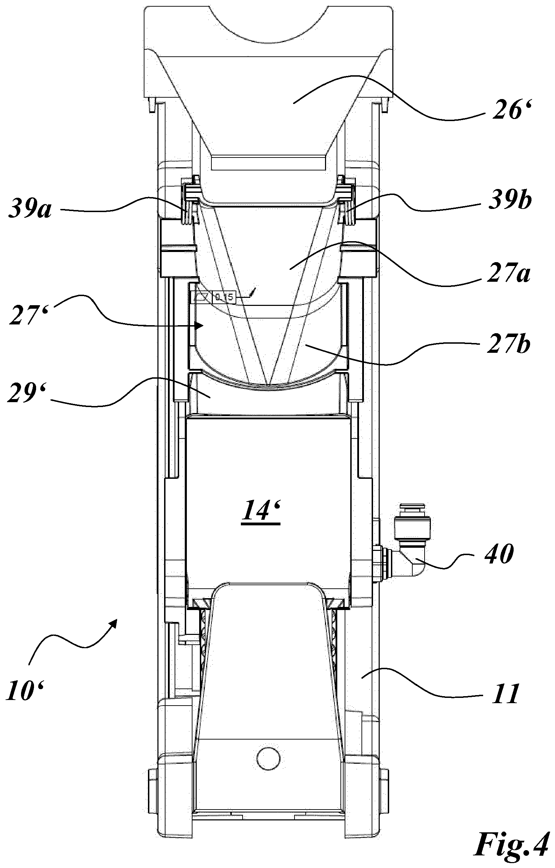

Da der vergrösserte Brühzylinder 14' in der in Fig. 2 gezeigten Einfüllposition sich in axialer Richtung weiter nach oben erstreckt als im Beispiel der Fig. 1, muss auch der schwenkbare Trichter 27' gegenüber Fig. 1 verändert und angepasst werden, damit beim Hochfahren des Brühzylinders eine Kollision vermieden wird. Der um die Schwenkachse 35 (Fig. 3) gegen die Federkraft zweier Drehfedern (39a,b in Fig. 4) schwenkbare Trichter 27' ist dazu nicht länger als gerader Trichter mit nur einer Neigung ausgebildet, sondern ist leicht verkürzt und weist eine nach innen orientierte Krümmung auf, die in diesem Fall durch zwei hintereinander angeordnete Trichterabschnitte 27a und 27b mit abnehmender Neigung erzeugt wird. Die Neigung des oberen Trichterabschnitts 27a entspricht dabei der Neigung des Trichters 27 in Fig. 1. Am Trichter 27' ist zum Ausschwenken gemäss Fig. 3 ein Führungselement 37 angebracht, das beim Hochfahren des Brühzylinders 14' an einer Führungskulisse 38 des um die Schwenkachse 36 verschwenkbaren Abstreifers 29' entlang fährt (siehe Fig. 3). Der obere Trichter 26' bleibt praktisch unverändert.

Aufgrund des grösseren Innendurchmessers d2 des Brühzylinders 14' muss auch die Rutsche 54' für den mittels des Abstreifers 29' abgestreiften Kaffeepulverkuchen weiter nach aussen verlegt werden, was ohne konstruktive Änderungen am Rahmen 11 erfolgen kann.

Eine andere mögliche Änderung im Brühteil 10b betrifft aber auch den inneren Aufbau des oberen Kolbens 12', durch den der gebrühte Kaffee aus der Brühkammer 16' über ein entsprechendes Sieb 34 zum Auslass der Kaffeemaschine geleitet wird. Da der Brühvorgang eine optimale Verteilung und Durchleitung des über einen seitlichen Brühwasseranschluss (40 in Fig. 4) zugeführten Brühwassers durch das in der Brühkammer 16' eingeschlossene, komprimierte Kaffeepulver erfordert, der zunächst eine möglichst gleichmässige Befeuchtung des Pulvers vorausgehen muss, kommt der Ableitung des gebrühten Kaffees durch den oberen Kolben 12' eine besondere Bedeutung zu.

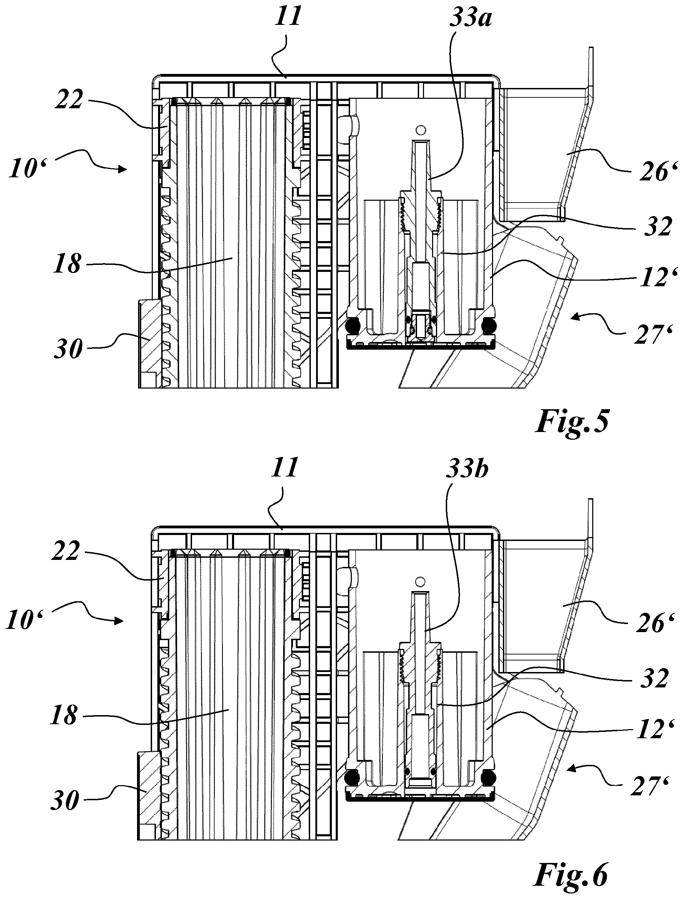

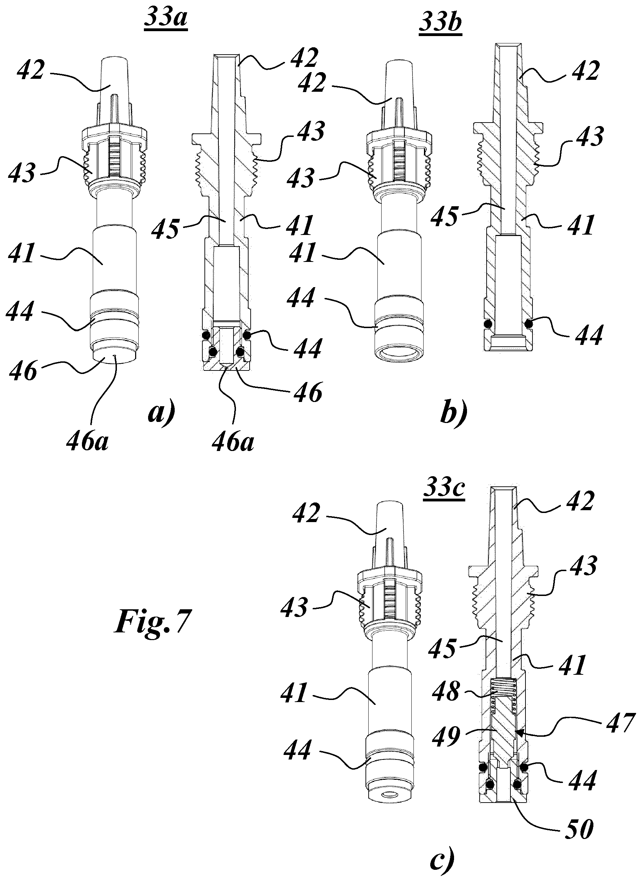

Um hier modular Veränderungen vornehmen zu können, ist im Zentrum des oberen Kolbens 12' ein axialer Durchgang 32 ausgebildet, in den auswechselbare Einsätze 33 (33a,b in Fig. 5 und 6; 33a-c in Fig. 7) eingesetzt, insbesondere dichtend eingeschraubt werden können. In Fig. 5 und 6 sind zwei derartige Einsätze 33a und 33b in einer vergrösserten Ausschnittsdarstellung wiedergegeben. Die Fig. 7 zeigt die Einsätze 33a und 33b als separate Teile (Fig. 7a und b), sowie einen weiteren Einsatz 33c (Fig. 7c).

Der in Fig. 5 eingeschraubte Einsatz 33a, der in Fig. 7a einzeln im Längsschnitt und in 3D-Darstellung wiedergegeben ist, umfasst einen länglichen zylindrischen Körper mit einer zentralen Bohrung 45. Am einen Ende ist an dem Körper 41 eine Schlauchtülle 42 ausgebildet, auf die der zum Auslass der Kaffeemaschine führende Auslassschlauch gesteckt wird. Am anderen Ende ist aussen in einer Ringnut eine Dichtung in Form eines O-Rings vorgesehen, der den Einsatz 33a im Durchgang 32 abdichtet. An diesem Ende ist auch eine Blende 46 mit einer zentralen Blendenöffnung 46a in den Körper 41 dichtendeingesetzt, z.B. eingeschraubt. Die Blende reduziert den Durchfluss massiv und trägt so zu einer besseren Verteilung und längeren Verweilzeit des Brühwassers in der Brühkammer 16' bei, wodurch das Brühergebnis beeinflusst wird. Zum Einschrauben des Einsatzes 33a ist vor der Schlauchtülle 42 aussen ein Gewindeabschnitt ausgebildet, der mit einem entsprechenden Innengewinde im Durchgang 32 korrespondiert.

Ein weiterer beispielhafter Einsatz 33b gemäss Fig. 6 und 7b ist in der Ausgestaltung weitgehend identisch mit dem Einsatz 33a, verzichtet jedoch auf eine Blende. Dies führt zu einem drastisch erhöhten Durchfluss und damit auch zu einem veränderten Brühverhalten und -ergebnis.

Ein dritter beispielhafter Einsatz 33c gemäss Fig. 7c ist am unteren Ende als Rückschlagventil 47 ausgebildet. Ein Ventilkörper 49 wird durch eine Feder 48 entgegen der Strömungsrichtung dichtend gegen einen eingeschraubten Ventilsitz 50 gedrückt. Steigt der Druck in der Brühkammer 16' an, öffnet das Rückschlagventil 47 zunehmend und lässt den aufgebrühten Kaffee zum Auslass durch. Dadurch ergibt sich eine Brühcharakteristik, die durch Wahl der Feder 48 aber auch den Durchlassquerschnitt des Ventilsitzes 50 beeinflusst und optimiert werden kann.

Diese Einsätze 33a-c können wahlweise eingebaut und ausgewechselt werden, um den Brühteil funktionell an bestimmte Anforderungen anzupassen. Mit diesen Einsätzen und den austauschbaren Kolben und Brühzylindern im Brühteil steht ein modularer Baukasten für eine zuverlässige Brüheinheit zur Verfügung, der durch Verwendung eines gemeinsamen Antriebsteils kostengünstig Änderungen in den Brühbedingungen ermöglicht. Die Auswechselbaren Einsätze können aber auch in Brüheinheiten der in Fig. 1 gezeigten Art mit Vorteil eingesetzt werden, ohne dass anderweitige Änderung im Brühteil vorgenommen werden.

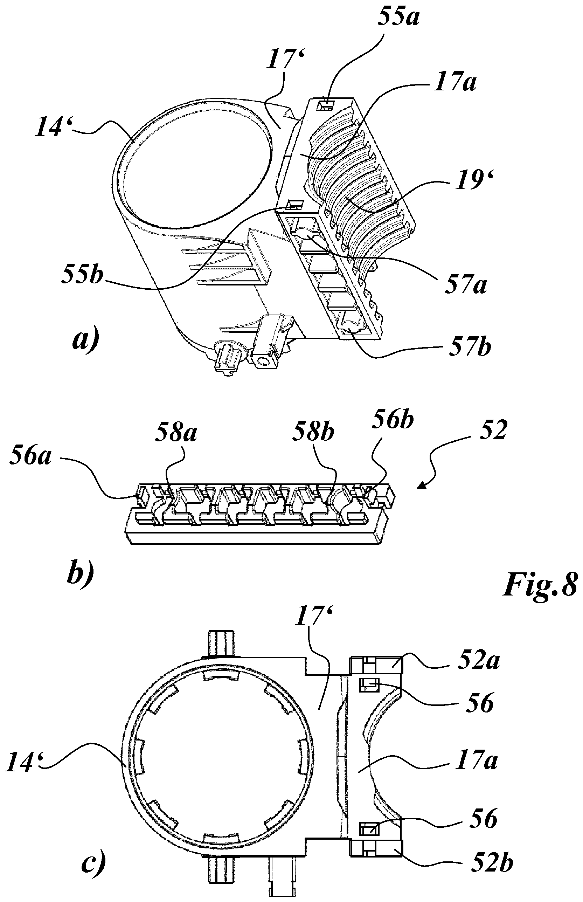

Eine weitere Vereinfachung lässt sich gemäss Fig. 8 auch am Brühzylinder 14' einführen. Um den Brühzylinder 14' mit der Spindel 18 in axialer Richtung verfahren zu können, muss der Brühzylinder 14' im Rahmen 11 geführt werden. Dazu sind an dem mit einem entsprechenden trapezförmigen Gewinde 19' versehenen Gewindeteil 17a des Mitnahmeteils 17' seitlich Führungsschienen 52a,b angeordnet (Fig. 8c), mit denen der Brühzylinder 14' in entsprechenden Nuten im Rahmen geführt wird. Diese Führungsschienen 52a,b, die bisher mit Metallschrauben am Gewindeteil 17a befestigt waren, werden nunmehr auf den Gewindeteil 17a seitlich einrastend aufgeschnappt.

Zur Verwirklichung der Aufschnappfunktion sind an den gegenüberliegenden Seiten des Gewindeteils 17a gemäss Fig. 8a jeweils oben und unten Freistellungen 55a,b vorgesehen, in welche die Führungsschiene 52 bzw. 52a,b mit entsprechenden Schnäppern 56a,b (Fig. 8b) einschnappen kann. Zur Führung der Führungsschienen 52 bzw. 52a,b sind an den Seiten des Gewindeteils 17a oben und unten pfostenartige erste Führungselemente 57a,b angeformt (Fig. 8a), an denen die Führungsschienen 52 bzw. 52a,b mit entsprechenden zweiten Führungselementen (58a,b (Fig. 8b) beim Aufschnappen anstossen und entlanggleiten.

Die aufschnappbaren Führungselemente 52 bzw. 52a,b vereinfachen den Umbau der modularen Brüheinheit weiter, sind aber auch mit Vorteil bei herkömmlichen Brüheinheiten einsetzbar.

### Bezugszeichenliste

- 10,10': Brüheinheit
- 10a: Antriebsteil
- 10b,10b': Brühteil
- 11: Rahmen
- 12,12': oberer Kolben
- 13,13': unterer Kolben
- 14,14': Brühzylinder
- 15,15': zylindrische Bohrung
- 16,16': Brühkammer
- 17,17': Mitnahmeteil
- 17a: Gewindeteil
- 18: Spindel
- 19,19': trapezförmiges Gewinde
- 20,21: Lagerzapfen
- 22,23: Lagerring
- 24: Lagerelement
- 25: Elektromotor
- 26,26': Trichter
- 27,27': schwenkbarer Trichter
- 27a,b: Trichterabschnitt
- 28: Klinkeinrichtung
- 29,29': Abstreifer
- 30: Abstützplatte
- 31: Antriebsachse (Spindel)
- 32: Durchgang
- 33,33a-c: Einsatz (einschraubbar)
- 34: Sieb
- 35,36: Schwenkachse
- 37: Führungselement
- 38: Schwenkkulisse
- 39,39a,b: Drehfeder
- 40: Brühwasseranschluss
- 41: Körper
- 42: Schlauchtülle
- 43: Gewindeabschnitt
- 44: Dichtung
- 45: Bohrung
- 46: Blendeneinsatz
- 46a: Blendenöffnung
- 47: Rückschlagventil
- 48: Feder
- 49: Ventilkörper
- 50: Ventilsitz
- 51: Achse (Brühteil)
- 52a,b: Führungsschiene
- 53: Adapterring
- 54,54': Rutsche
- 55a,b: Freistellung
- 56a,b: Schnäpper
- 57a,b: Führungselement
- 58a,b: Führungselement
- d1,d2: Innendurchmesser (Brühkammer)

## Patentansprüche

1. Modulare Brüheinheit (10, 10') für eine Kaffeemaschine, umfassend mehrere unterschiedlich ausgebildete Brühteile (10b, 10b') und einen Antriebsteil (10a), wobei jeweils ein Brühteil (10b, 10b') und der Antriebsteil (10a) parallel nebeneinander in einem gemeinsamen Rahmen (11) angeordnet sind, wobei der Brühteil (10b, 10b') entlang einer gemeinsamen ersten Achse (51) konzentrisch angeordnet einen oberen Kolben (12, 12'), einen unteren Kolben (13, 13') und zwischen den beiden Kolben (12, 12' bzw. 13, 13') einen Brühzylinder (14, 14') mit einer zylindrischen Bohrung (15, 15') zur Aufnahme der beiden Kolben (12, 12' bzw. 13, 13') unter Ausbildung einer Brühkammer (16, 16') aufweist, und wobei der Antriebsteil (10a) eine Spindel (18) umfasst, welche sich entlang einer zur ersten Achse parallelen Antriebsachse (31) erstreckt, um diese Antriebsachse (31) drehbar im Rahmen (11) gelagert ist und mit dem Brühzylinder (14, 14') und dem unteren Kolben (13, 13') derart in Engriff steht, dass während eines Brühzyklus bei Drehung der Spindel (18) der Brühzylinder (14, 14') und der untere Kolben (13, 13') relativ zum im Rahmen (11) fest montierten oberen Kolben (12, 12') entlang der ersten Achse verfahren werden, **dadurch gekennzeichnet, dass** zur Verwirklichung unterschiedlicher Brühbedingungen der Antriebsteil (10a) mit den unterschiedlich ausgebildeten Brühteilen (10b, 10b') wahlweise kombinierbar ist.

2. Brüheinheit nach Anspruch 1, **dadurch gekennzeichnet, dass** die unterschiedlich ausgebildeten Brühteile (10b, 10b') zur Aufnahme unterschiedlicher Mengen an Kaffeepulver pro Brühzyklus ausgebildet sind.

3. Brüheinheit nach Anspruch 2, **dadurch gekennzeichnet, dass** sich die unterschiedlich ausgebildeten Brühteile (10b, 10b') in der Grösse der Brühkammer (16, 16') unterscheiden.

4. Brüheinheit nach Anspruch 3, **dadurch gekennzeichnet, dass** sich die unterschiedlich ausgebildeten Brühteile (10b, 10b') im Innendurchmesser (d1, d2) der Brühkammer (16, 16') unterscheiden, und dass der obere und untere Kolben (12, 12' b zw. 13, 13') im Aussendurchmesser an den Innendurchmesser (d1, d2) der Brühkammer (16, 16') angepasst sind.

5. Brüheinheit nach Anspruch 1, **dadurch gekennzeichnet, dass** der Brühzylinder (14, 14') durch die Spindel (18) angetrieben ist, dass der untere Kolben (13, 13') im Brühzylinder (18) entlang der ersten Achse (51) verfahrbar gelagert ist, dass der untere Kolben (13, 13') mittels einer am Rahmen (11) fest angeordneten Klinkeinrichtung (28) in einer unteren Endstellung fixierbar ist, und dass die Klinkeinrichtung (28) für unterschiedlich ausgebildete Brühteile (10b, 10b') dieselbe ist.

6. Brüheinheit nach Anspruch 1, **dadurch gekennzeichnet, dass** am Brühteil (10b, 10b') ein schwenkbarer Trichter (27, 27') zum Einfüllen des Kaffeepulvers in die geöffnete Brühkammer (16, 16') vorgesehen ist, und dass der schwenkbare Trichter (27, 27') in seiner Ausgestaltung an den unterschiedlich ausgebildeten Brühteil (10b, 10b') angepasst ist.

7. Brüheinheit nach Anspruch 6, **dadurch gekennzeichnet, dass** der schwenkbare Trichter (27, 27') in seiner Länge an den Brühzylinder (14, 14') angepasst ist.

8. Brüheinheit nach Anspruch 7, **dadurch gekennzeichnet, dass** der schwenkbare Trichter (27') eine Krümmung (27a, 27b) aufweist.

9. Brüheinheit nach Anspruch 8, **dadurch gekennzeichnet, dass** der schwenkbare Trichter (27') mehrere Trichterabschnitte (27a, 27b) unterschiedlicher Neigung aufweist.

10. Brüheinheit nach Anspruch 1, **dadurch gekennzeichnet, dass** der Auslass des gebrühten Kaffees durch den oberen Kolben (12, 12') erfolgt, und dass zur Verwirklichung unterschiedlicher Brühbedingungen im Brühteil (10b, 10b') das Auslassverhalten im oberen Kolben (12, 12') durch auswechselbare Einsätze (33, 33a-c) im oberen Kolben (12') anpassbar ist.

11. Brüheinheit nach Anspruch 10, **dadurch gekennzeichnet, dass** der obere Kolben (12') für den Auslass einen zentralen Durchgang (32) aufweist, und dass die auswechselbaren Einsätze (33, 33a-c) in den Durchgang dichtend einsetzbar, insbesondere einschraubbar, sind.

12. Brüheinheit nach Anspruch 10, **dadurch gekennzeichnet, dass** die auswechselbaren Einsätze (33, 33a-c) jeweils einen zylindrischen Körper (41) mit einer konzentrischen Bohrung (45) für den Durchlass des aufgebrühten Kaffees aufweisen.

13. Brüheinheit nach Anspruch 12, **dadurch gekennzeichnet, dass** die auswechselbaren Einsätze (33, 33a-c) einen aussen liegenden Gewindeabschnitt (43) aufweisen, am einen Ende in eine Schlauchtülle (42) übergehen, und am anderen Ende mit einer aussen liegenden Dichtung (44) versehen sind.

14. Brüheinheit nach Anspruch 12, **dadurch gekennzeichnet, dass** die auswechselbaren Einsätze (33a, 33c) mit Mitteln (46, 46a; 47) zur Beeinflussung des Durchflusses durch die Bohrung (45) ausgestattet sind.

15. Brüheinheit nach Anspruch 14, **dadurch gekennzeichnet, dass** die Mittel (46, 46a; 47) zur Beeinflussung des Durchflusses durch die Bohrung (45) eine auswechselbare Blende (46) umfassen.

16. Brüheinheit nach Anspruch 14, **dadurch gekennzeichnet, dass** die Mittel (46, 46a; 47) zur Beeinflussung des Durchflusses durch die Bohrung (45) ein Rückschlagventil (47, 48, 49, 50) umfassen.

17. Brüheinheit nach Anspruch 1, **dadurch gekennzeichnet, dass** der Brühzylinder (14') in einem Mitnahmeteil (17') ausgebildet ist, welches über ein Gewindeteil (17a) mit der Spindel (18) in Eingriff steht und über seitlich angesetzte Führungsschienen (52a,b) im Rahmen (11) parallel zur ersten Achse (51) geführt ist, und dass die Führungsschienen (52a,b) auf den Gewindeteil (17a) einrastend aufgeschnappt sind.

## Claims

1. A modular brewing unit (10, 10') for a coffee machine, comprising multiple brew parts (10b, 10b') of different designs and a drive part (10a), wherein in each case a brew part (10b, 10b') and the drive part (10a) are situated in parallel one next to one another in a shared frame (11), wherein the brewing part (10b, 10b'), situated concentrically along a shared first axis (51), has an upper piston (12, 12'), a lower piston (13, 13') and, between the two pistons (12, 12' and 13, 13'), a brewing cylinder (14, 14') with a cylindrical borehole (15, 15') for accommodating the two pistons (12, 12' and 13, 13'), thus forming a brewing chamber (16, 16'), and wherein the drive part (10a) includes a spindle (18) that extends along a drive axis (31), parallel to the first axis, that is mounted in the frame (11) so as to be rotatable about the drive axis (31), and that is in engagement with the brewing cylinder (14') and the lower piston (13, 13') in such a way that during a brewing cycle, when the spindle (18) rotates, the brewing cylinder (14, 14') and the lower piston (13, 13') are displaced along the first axis relative to the upper piston (12, 12') which is fixedly mounted in the frame (11), **characterized in that** the drive part (10a) is selectively combinable with the brewing parts (10b, 10b') of different designs in order to provide different brewing conditions.

2. The brewing unit according to Claim 1, **characterized in that** the brew parts (10b, 10b') of different designs are designed for accommodating different quantities of coffee powder per brewing cycle.

3. The brewing unit according to Claim 2, **characterized in that** the brew parts (10b, 10b') of different designs differ in the size of the brewing chamber (16, 16').

4. The brewing unit according to Claim 3, **characterized in that** the brew parts (10b, 10b') of different designs have different inner diameters (d1, d2) of the brewing chamber (16, 16'), and the outer diameter of the upper and lower pistons (12, 12' and 13, 13') is adapted to the inner diameter (d1, d2) of the brewing chamber (16, 16').

5. The brewing unit according to Claim 1, **characterized in that** the brewing cylinder (14, 14') is driven by the spindle (18), that the lower piston (13, 13') is supported in the brewing cylinder (18) so as to be movable along the first axis (51), the lower piston (13, 13') is fixable in a bottom end position by means of a latch device (28) that is fixedly mounted on the frame (11), and that the latch device (28) is the same for brew parts (10b, 10b').

6. The brewing unit according to Claim 1, **characterized in that** a pivotable funnel (27, 27') for filling the coffee powder into the opened brewing chamber (16, 16') is provided on the brew part (10b, 10b'), and that the configuration of the pivotable funnel (27, 27') is adapted to the brew parts (10b, 10b') of different designs.

7. The brewing unit according to Claim 6, **characterized in that** the length of the pivotable funnel (27, 27') is adapted to the brewing cylinder (14, 14').

8. The brewing unit according to Claim 7, **characterized in that** the pivotable funnel (27') has a curvature (27a, 27b).

9. The brewing unit according to Claim 8, **characterized in that** the pivotable funnel (27') has multiple funnel sections (27a, 27b) with different inclinations.

10. The brewing unit according to Claim 1, **characterized in that** the outlet for the brewed coffee is provided through the upper piston (12, 12'), and in order to provide different brewing conditions in the brew part (10b, 10b'), the outlet characteristics in the upper piston (12, 12') are adaptable via exchangeable inserts (33, 33a-c) in the upper piston (12').

11. The brewing unit according to Claim 10, **characterized in that** the upper piston (12') has a central passage (32) for the outlet, and the exchangeable inserts (33, 33a-c) are insertable, in particular screwable, into the passage in a sealing manner.

12. The brewing unit according to Claim 10, **characterized in that** the exchangeable inserts (33, 33a-c) each have a cylindrical body (41) with a concentric borehole (45) for the brewed coffee to pass through.

13. The brewing unit according to Claim 12, **characterized in that** the exchangeable inserts (33, 33a-c) have an external threaded section (43), merge into a hose connector (42) at one end, and are provided with an external seal (44) at the other end.

14. The brewing unit according to Claim 12, **characterized in that** the exchangeable inserts (33a, 33c) are provided with means (46, 46a; 47) for influencing the flow through the borehole (45).

15. The brewing unit according to Claim 14, **characterized in that** the means (46, 46a; 47) for influencing the flow through the borehole (45) include an exchangeable cover (46).

16. The brewing unit according to Claim 14, **characterized in that** the means (46, 46a; 47) for influencing the flow through the borehole (45) include a check valve (47, 48, 49, 50).

17. The brewing unit according to Claim 1, **characterized in that** the brewing cylinder (14') is provided in a carrier part (17') that is in engagement with the spindle (18) via a threaded part (17a), and is guided in the frame (11), parallel to the first axis (51), via laterally mounted guide tracks (52a, b), and the guide tracks (52a, b) are snapped onto the threaded part (17a) in a locking manner.

## Revendications

1. Unité d'ébouillantage modulaire (10, 10') pour une machine à café, comprenant plusieurs parties d'ébouillantage (10b, 10b') de conception différente et une partie d'entraînement (10a), dans laquelle respectivement une partie d'ébouillantage (10b, 10b') et la partie d'entraînement (10a) sont disposées en parallèle l'une à côté de l'autre dans un cadre commun (11), dans laquelle la partie d'ébouillantage (10b, 10b') présente, disposés de manière concentrique suivant un premier axe commun (51), un piston supérieur (12, 12'), un piston inférieur (13, 13') et entre les deux pistons (12, 12' ou 13, 13') un cylindre d'ébouillantage (14, 14') muni d'un perçage cylindrique (15, 15') pour recevoir les deux pistons (12, 12' ou 13, 13') en réalisant une chambre d'ébouillantage (16, 16'), et dans laquelle la partie d'entraînement (10a) comprend une broche (18) s'étendant suivant un axe d'entraînement (31) parallèle au premier axe, est montée dans le cadre (11) en rotation autour de cet axe d'entraînement (31) et est en prise avec le cylindre d'ébouillantage (14, 14') et le piston inférieur (13, 13') de telle sorte que pendant un cycle d'ébouillantage, en cas de rotation de la broche (18), le cylindre d'ébouillantage (14, 14') et le piston inférieur (13, 13') sont déplacés suivant le premier axe par rapport au piston supérieur (12, 12') monté de manière fixe dans le cadre (11), **caractérisée en ce que** la partie d'entraînement (10a) peut être combinée sélectivement avec des parties d'ébouillantage (10b, 10b') de conception différente en vue de créer différentes conditions d'ébouillantage.

2. Unité d'ébouillantage selon la revendication 1, **caractérisée en ce que** les parties d'ébouillantage (10b, 10b') de conception différente sont réalisées pour recevoir différentes quantités de café en poudre par cycle d'ébouillantage.

3. Unité d'ébouillantage selon la revendication 2, **caractérisée en ce que** les parties d'ébouillantage (10b, 10b') de conception différente se distinguent par la taille de la chambre d'ébouillantage (16, 16').

4. Unité d'ébouillantage selon la revendication 3, **caractérisée en ce que** les parties d'ébouillantage (10b, 10b') de conception différente se distinguent par le diamètre intérieur (d1, d2) de la chambre d'ébouillantage, et **en ce que** les pistons supérieur et inférieur (12, 12' ou 13, 13') sont adaptés en diamètre extérieur au diamètre intérieur (d1, d2) de la chambre d'ébouillantage (16, 16').

5. Unité d'ébouillantage selon la revendication 1, **caractérisée en ce que** le cylindre d'ébouillantage (14, 14') est entraîné par la broche (18), **en ce que** le piston inférieur (13, 13') est monté dans le cylindre d'ébouillantage (18) de manière mobile suivant le premier axe (51), **en ce que** le piston inférieur (13, 13') peut être fixé dans une position d'extrémité inférieure au moyen d'un dispositif d'encliquetage (28) disposé de manière fixe sur le cadre (11), et **en ce que** le dispositif d'encliquetage (28) est le même pour des parties d'ébouillantage (10b, 10b') de conception différente.

6. Unité d'ébouillantage selon la revendication 1, **caractérisée en ce que** sur la partie d'ébouillantage (10b, 10b') est prévu un entonnoir pivotant (27, 27') pour charger le café en poudre dans la chambre d'ébouillantage (16, 16') ouverte, et **en ce que** l'entonnoir pivotant (27, 27') est adapté en configuration à la partie d'ébouillantage (10b, 10b') de conception différente.

7. Unité d'ébouillantage selon la revendication 6, **caractérisée en ce que** l'entonnoir pivotant (27, 27') est adapté en longueur au cylindre d'ébouillantage (14, 14').

8. Unité d'ébouillantage selon la revendication 7, **caractérisée en ce que** l'entonnoir pivotant (27') présente une courbure (27a, 27b).

9. Unité d'ébouillantage selon la revendication 8, **caractérisée en ce que** l'entonnoir pivotant (27') présente plusieurs portions d'entonnoir (27a, 27b) d'inclinaison différente.

10. Unité d'ébouillantage selon la revendication 1, **caractérisée en ce que** la sortie du café préparé se résulte par le piston supérieur (12, 12'), et **en ce que** le comportement de sortie dans le piston supérieur (12, 12') peut être adapté par des inserts amovibles (33, 33a à c) dans le piston supérieur (12') en vue de créer des conditions d'ébouillantage différentes dans la partie d'ébouillantage (10b, 10b').

11. Unité d'ébouillantage selon la revendication 10, **caractérisée en ce que** le piston supérieur (12') présente pour la sortie un passage central (32), et **en ce que** les inserts amovibles (33, 33a à c) peuvent être placés, en particulier vissés, dans le passage de manière étanche.

12. Unité d'ébouillantage selon la revendication 10, **caractérisée en ce que** les inserts amovibles (33, 33a à c) présentent respectivement un corps cylindrique (41) avec un perçage concentrique (45) pour le passage du café préparé.

13. Unité d'ébouillantage selon la revendication 12, **caractérisée en ce que** les inserts amovibles (33, 33a à c) présentent une portion filetée (43) située à l'extérieur, passent à une extrémité à un embout de tuyau (42) et sont munis à l'autre extrémité d'un joint (44) situé à l'extérieur.

14. Unité d'ébouillantage selon la revendication 12, **caractérisée en ce que** les inserts amovibles (33a, 33c) sont équipés de moyens (46, 46a ; 47) pour affecter le passage à travers le perçage (45).

15. Unité d'ébouillantage selon la revendication 14, **caractérisée en ce que** les moyens (46, 46a ; 37) pour affecter le passage à travers le perçage (45) comprennent un obturateur amovible (46).

16. Unité d'ébouillantage selon la revendication 14, **caractérisée en ce que** les moyens (46, 46a ; 47) pour affecter le passage à travers le perçage (45) comprennent un clapet antiretour (47, 48, 49, 50).

17. Unité d'ébouillantage selon la revendication 1, **caractérisée en ce que** le cylindre d'ébouillantage (14') est réalisé dans une partie d'entraînement (17') qui est en prise avec la broche (18) par l'intermédiaire d'une partie filetée (17a) et est guidée dans le cadre (11) en parallèle au premier axe (51) par des rails de guidage (52a, b) rapportés latéralement, et **en ce que** les rails de guidage (52a, b) sont verrouillés sur la partie filetée (17a) par encliquetage.
